# EUROPEAN PATENT APPLICATION

(11) **EP 4 755 235 A1**
(43) Date of publication of application: **10.06.2026**
(21) Application number: 24849518.6
(22) Date of filing: 26.07.2024
(51) Int. Cl.: A24F 40/95, A24F 40/90, A24F 40/40, A24F 40/42, A24F 40/46, A24F 40/50, A24F 40/60

(54) **AEROSOL-GENERATING DEVICE**

(30) Priority: 31.07.2023 KR 20230099868; 05.10.2023 KR 20230132505
(71) Applicant: KT&G Corporation, Daedeok-gu Daejeon 34337 (KR)
(72) Inventor: WOO, Young Min, Hwaseong-si, Gyeonggi-do 18391 (KR); KIM, Jae Hyuk, Seoul 06352 (KR); PARK, Sang Cheol, Suwon-si, Gyeonggi-do 16469 (KR); SEO, Jang Won, Daejeon 34023 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010946
(87) International publication number: WO 2025/028949

(57) **Abstract**

An aerosol generating device includes a main-body forming an exterior, a battery including a first battery electrode arranged on a first surface and a second battery electrode arranged on a second surface different from the first surface, a battery coupling unit to which the battery is detachably coupled, and a main-body electrode arranged on the battery coupling unit and selectively electrically connected to one of the first battery electrode and the second battery electrode.

## Description

### Technical Field

The present disclosure relates to an aerosol generating device, and more particularly, to an aerosol generating device including a detachable battery.

### Background Art

The demand for aerosol generating devices that produce aerosols through a non-combustion method, instead of burning cigarettes to generate aerosols, is increasing recently. For example, researches for generating aerosol from aerosol generating material in solid state or liquid state or researches for providing aerosol with flavor after generating vapor from aerosol generating material and then by passing the vapor through flavoring medium in solid state are actively being in progress.

Recently, aerosol generating devices are suggested for generating aerosol by heating aerosol generating article in a way for replacing the method of generating aerosol by burning cigarette. An aerosol generating device, for example, is a device that generates aerosol from an aerosol generating material in a solid state or liquid state by heating the aerosol generating material with predetermined temperature.

The aerosol generating device may be powered by a battery. In this case, the battery may be a battery that is detachable from the aerosol generating device. The aerosol generating device may include a battery coupling unit that may be coupled with the detachable battery.

### Disclosure of Invention

### Technical Problem

An aerosol generating device may include a battery coupling unit that may be coupled with a detachable battery. The detachable battery may be repeatedly separated from and coupled with the aerosol generating device by a user. However, when the battery is not coupled with the aerosol generating device in a correct direction, the aerosol generating device may not operate.

An object to be solved through various embodiments of the present disclosure is to provide an aerosol generating device including a battery that may supply power thereto regardless of a coupling direction of the battery.

Another object to be solved through various embodiments of the present disclosure is to provide an aerosol generating device that may prevent damage of internal components regardless of a coupling direction of a battery.

Still another object to be solved through various embodiments of the present disclosure is to provide an aerosol generating device including a battery that may stably supply power thereto regardless of a size of the battery.

The technical problems of the present disclosure are not limited to the above-described description, and other technical problems may be clearly understood by one of ordinary skill in the art from the embodiments to be described hereinafter.

### Solution to Problem

An aerosol generating device according to an embodiment may include a main-body forming an exterior, a battery including a first battery electrode arranged on a first surface and a second battery electrode arranged on a second surface different from the first surface, a battery coupling unit to which the battery is detachably coupled, and a main-body electrode arranged on the battery coupling unit and selectively electrically connected to one of the first battery electrode and the second battery electrode.

The first surface and the second surface of the battery may face in opposite directions.

The battery may have a shape of cylinder or a shape of elliptical cylinder.

Each of the first surface and the second surface may be a bottom surface of the cylinder or the elliptical cylinder that forms a shape of the battery.

The main-body electrode may be circular. Each of the first battery electrode and the second battery electrode may be circular, in correspondence with a shape of the main-body electrode.

The aerosol generating device may further include an elastic body that presses the main-body electrode toward the battery.

The battery may have a shape of a rectangular cuboid. The first surface and the second surface may face in the opposite directions.

The first surface and the second surface may be inclined surfaces forming a predefined angle with respect to a longitudinal direction of the battery. The battery coupling unit may include a main-body inclined surface arranged at a position that faces either the first surface or the second surface. The main-body electrode may be disposed on the main-body inclined surface.

The aerosol generating device may further include a battery cover that selectively opens or closes the battery coupling unit.

The battery coupling unit may be opened in the longitudinal direction of the main-body, when opened by the battery cover.

The battery coupling unit may be opened in a direction transverse to the longitudinal direction of the main-body, when opened by the battery cover.

The battery cover may include a cover electrode that is selectively electrically connected to one of the first battery electrode and the second battery electrode.

The cover electrode may supply power to the battery through the first battery electrode or the second battery electrode.

### Advantageous Effects of Invention

An aerosol generating device according to various embodiments of the present disclosure may provide an effect of supplying power to the aerosol generating device regardless of a coupling direction of a battery, by providing the aerosol generating device including a battery in which a plurality of battery electrodes are arranged.

An aerosol generating device according to various embodiments of the present disclosure may provide an effect of preventing damage of a terminal regardless of a coupling direction of a battery, by inclining an electrode of the battery and an electrode of the battery coupling unit.

An aerosol generating device according to various embodiments of the present disclosure may provide an effect of stably supplying power thereto regardless of a size of a battery, by providing an elastic body that presses a terminal.

However, effects of the embodiments are not limited to the above-described effects, and effects not mentioned may be clearly understood by one of ordinary skill in the art to which the embodiments.

### Brief Description of Drawings

FIG. 1 is a perspective view illustrating an aerosol generating device according to an embodiment of the present disclosure;
FIG. 2 illustrates an aerosol generating device of various embodiments of the present disclosure;
FIG. 3 illustrates an aerosol generating device of various embodiments of the present disclosure;
FIG. 4 illustrates an aerosol generating device of various embodiments of the present disclosure;
FIG. 5 illustrates an aerosol generating device of various embodiments of the present disclosure;
FIG. 6 illustrates an aerosol generating device of various embodiments of the present disclosure;
FIG.7 a diagram for explaining an aerosol generating device of an embodiment of the disclosure;
FIG. 8 is a perspective view for explaining an aerosol generating device according to an embodiment of the present disclosure;
FIG. 9A is a diagram for explaining an aerosol generating device according to an embodiment of the present disclosure;
FIG. 9B is a diagram for explaining an aerosol generating device 0f an embodiment of the present disclosure; and
FIG. 10 is a block diagram of an aerosol generating device of an embodiment of the disclosure.

### Best Mode for Carrying out the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

In addition, when describing the embodiments of the disclosure, the detailed description of the related known art, which may obscure the subject matter of the embodiments, may be omitted. Also, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

Although the terms first, second, etc. may be used herein to describe various elements or components, these elements or components should not be limited by these terms. These terms are only used to distinguish one element or component from another element or component.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

The singular forms are intended to include the plural forms as well, unless the context clearly indicates otherwise.

Hereinafter, the present disclosure will now be described more fully with reference to the accompanying drawings, in which exemplary embodiments of the present disclosure are shown such that one of ordinary skill in the art may easily work the present disclosure. However, the present disclosure may be implemented in various different forms and is not limited to the embodiments described herein.

The same or similar components will be assigned the same reference numerals regardless of the reference numerals in the drawings, and the same descriptions thereof will be omitted.

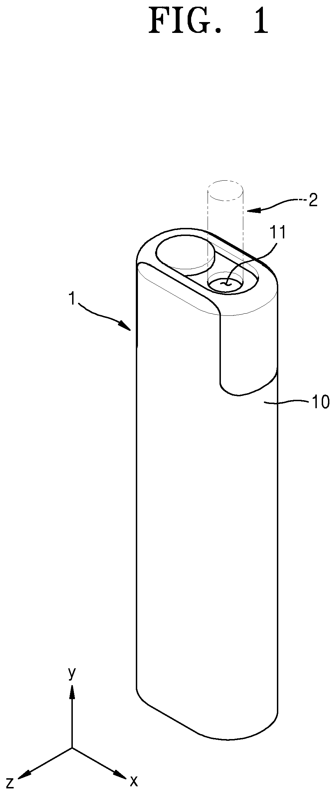

FIG. 1 is a perspective view illustrating an aerosol generating device according to an embodiment.

The aerosol generating device 1 can generate and provide aerosols.

The aerosol generating device 1 may include a main body 10. The main body 10 forms the overall exterior of the aerosol generating device 1 and may include an internal space. At least one of an article accommodation portion 11, a heater (not shown), a controller (not shown) and a battery (not shown) may be arranged inside the main body 10.

The article accommodation portion 11 may provide a space where an aerosol-generating article 2 can be detachably coupled or inserted. The aerosol generating article 2 may include an aerosol generating material that is heated by the heater to produce an aerosol. The article accommodation portion 10h may provide a space opened toward the exterior of the main body 10 to allow the aerosol generating article 2 to the inserted thereinto.

The article accommodation portion 10h may be formed by being recessed toward the interior of the main body 10 so that at least a part of the aerosol generating article 2 may be inserted into the insertion space. The depth of the article accommodation portion 10h may correspond to a length of a region in the aerosol generating article 2 including an aerosol generating material and/or a medium. A portion of the aerosol generating article 2 may be inserted into the main body 10, and another portion of the aerosol generating article 2 may protrude to the outside of the main body 10. A user may inhale air by holding, in the mouth, the portion of the aerosol generating article 2 exposed to the outside.

The heater (not shown) disposed inside the main body 10 may heat the aerosol-generating article 2. For example, the heater may include at least one of a tube-type heater, a plate-type heater, a needle-type heater and a rod-type heater. The heater may include an electrically resistive heater and/or an induction heater.

For example, the heater may be a resistive heater. The heater may include an electrically conductive track, and be heated as a current flows through the electrically conductive track. The heater may be electrically connected to a power source. The heater may generate heat by receiving a current from the power source.

For example, the heater may be a multiple heater. The heater may include a first heater and a second heater. The first heater and the second heater may be heated sequentially or simultaneously.

The aerosol generating device 1 may include an induction coil. The induction coil may make the heater generate heat. The heater may include a susceptor. The susceptor may generate heat by a magnetic field generated by an AC current flowing through the induction coil. The magnetic field may penetrate the susceptor and generate an eddy current within the susceptor. The eddy current may make the susceptor generate heat.

In another example, the susceptor may be included inside the aerosol generating article 2. The susceptor inside the aerosol generating article 2 may generate heat by a magnetic field generated by an AC current flowing through the induction coil. The susceptor may be disposed inside the aerosol generating article 2 and may not be electrically connected to the aerosol generating device. The susceptor may be inserted into the article accommodation portion 10h together with the aerosol generating article 2 and may be removed from the article accommodation portion 10h together with the aerosol generating article 2. When an AC current flows through the induction coil, the aerosol generating article 2 may be heated by the susceptor inside the aerosol generating article 2.

The power source may supply power such that the components of the aerosol-generating device 1 operate. The power source may be a battery capable of storing electric power. The power source may provide electric power to components such as the heater, the induction coil, and the controller.

The controller may control overall operations of the aerosol-generating device 1. The controller may be mounted on a printed circuit board (PCB). The controller may control an operation of at least one of the heater, the induction coil or the power supply. The controller may control the operation of components such as a display, an actuator (motor), etc. installed in the aerosol generating device 1. The controller may check a state of each of the components of the aerosol-generating device 1 to determine whether the aerosol-generating device 1 is in an operable state.

### Mode for the Invention

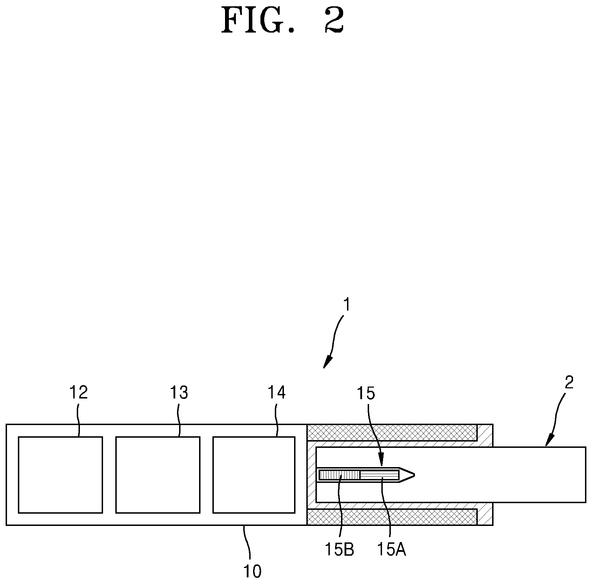

FIGs. 2 thorough 4 illustrate aerosol generating devices according to various embodiments.

Referring to FIG 2, the aerosol-generating device 1 according to an embodiment of the present disclosure may include at least one of a battery 12, a controller 13, a sensor unit 14, or an aerosol generator 15. At least one of the battery 12, the controller 13, the sensor unit 14, and the aerosol generator 15 may be disposed inside a main body 10 of the aerosol-generating device 1.

The main body 10 may provide a space opened toward one side to allow an aerosol generating article 2 to the inserted thereinto. The space opened toward the one side may be referred to as an article accommodation portion. The article accommodation portion may be formed by being recessed toward the interior of the main body 10 to a preset depth so that at least a part of the aerosol generating article 2 may be inserted into the insertion space. The depth of the article accommodation portion may correspond to a length of a region in the aerosol generating article 2 including an aerosol generating material and/or a medium. A lower end of the aerosol generating article 2 may be inserted into the main body 10, and an upper end of the aerosol generating article 2 may protrude to the outside of the main body 10. A user may inhale air by holding, in the mouth, the upper end of the aerosol generating article 2 exposed to the outside.

The aerosol generator 15 may heat the aerosol generating article 2. The aerosol generator 15 may extend outward in the longitudinal direction of the space where the aerosol generating article 2 is inserted. For example, the aerosol generator 15 may include at least one of a tube-type heater, a plate-type heater, a needle-type heater and a rod-type heater. The aerosol generator 15 may be inserted into one end of the aerosol generating article 2. The aerosol generator 15 may include an electrically resistive heater and/or an induction heater.

For example, referring to FIG. 2, the aerosol generator 15 may be a resistive heater. For example, the aerosol generator 15 may include an electrically conductive track, and be heated as a current flows through the electrically conductive track. The aerosol generator 15 may be electrically connected to the battery 12. The aerosol generator 15 may directly generate heat by receiving a current from the battery 12.

For example, the aerosol generator 15 may be a multiple heater. The heater may include a first aerosol generator 15A and a second aerosol generator 15B. The first aerosol generator 15A and the second aerosol generator 15B may be arranged side by side along the longitudinal direction. The first aerosol generator 15A and the second aerosol generator 15B may be heated sequentially or simultaneously.

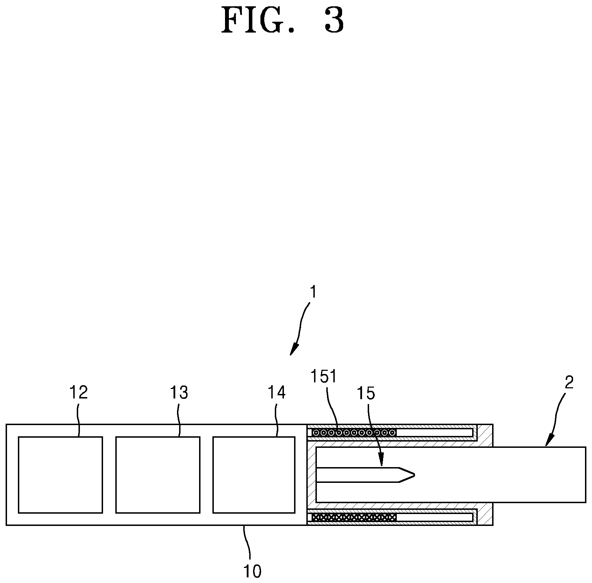

For example, referring to FIG. 3, the aerosol-generating device 1 may include an induction coil 151 surrounding the aerosol generator 15. The induction coil 151 may make the aerosol generator 15 generate heat. The aerosol generator 15, which is a susceptor, may generate heat by a magnetic field generated by an AC current flowing through the induction coil 151. The magnetic field may penetrate the aerosol generator 15 and generate an eddy current within the aerosol generator 15. The current may generate heat in the aerosol generator 15. The current may generate heat in the aerosol generator 15.

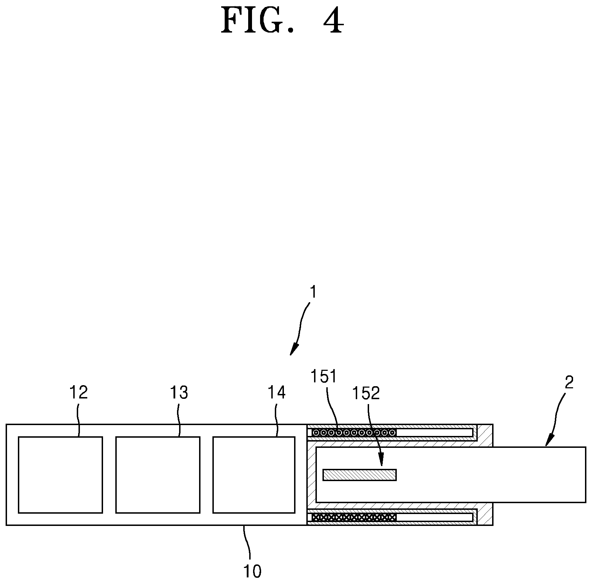

For example, referring to FIG. 4, the susceptor 152 may be included inside the aerosol generating article 2, and the susceptor 152 inside the aerosol generating article 2 may generate heat by a magnetic field generated by an AC current flowing through the induction coil 151. The susceptor 152 may be disposed inside the aerosol generating article 2 and may not be electrically connected to the aerosol generating device. The susceptor 152 may be inserted into the article accommodation portion together with the aerosol generating article 2 and may be removed from the article accommodation portion together with the aerosol generating article 2. The aerosol generating article 2 may be heated by the susceptor inside the aerosol generating article 2. In this case, the aerosol generating device 1 may not be provided with an aerosol generator 15.

The battery 12 may supply power such that the components of the aerosol-generating device 1 operate. The battery 12 may supply power to at least one of the controller 13, the sensor unit 14, or the aerosol generator 15. The battery 12 may supply power to the induction coil 151.

The controller 13 may control overall operations of the aerosol-generating device 1. The controller 13 may be mounted on a printed circuit board (PCB). The controller 13 may control an operation of at least one of the battery 12, the sensor unit 14 or the aerosol generator 15. The controller 13 may control the operation of the induction coil 151. The controller 13 may control the operation of components such as a display, an actuator (motor), etc. installed in the aerosol generating device 1. The controller 13 may check a state of each of the components of the aerosol-generating device 1 to determine whether the aerosol generating device 1 is in an operable state.

The controller 13 may analyze a result detected by the sensor unit 14 and control processes to be performed subsequently. For example, the controller 13 may control the power supplied to the aerosol generator 15 such that the operation of the aerosol generator 15 starts or ends based on a result detected by the sensor unit 14. For example, the controller 13 may control an amount of power supplied to the aerosol generator 15 and a time for which the power is supplied to the aerosol generator 15 such that the aerosol generator 15 may be heated to a preset temperature or maintained at an appropriate temperature based on the result detected by the sensor unit 14.

The sensor unit 14 may include at least one of a temperature sensor, a puff sensor, or an insertion detection sensor. For example, the sensor unit 14 may sense at least one of the temperature of the aerosol generator 15, the temperature of the battery 12, or the temperature inside and outside the main body 10. For example, the sensor unit 14 may sense a puff by the user. For example, the sensor unit 14 may sense whether the aerosol generating article 2 has been inserted into the insertion space. For example, the sensor unit 14 may sense a movement of the aerosol generating device 1.

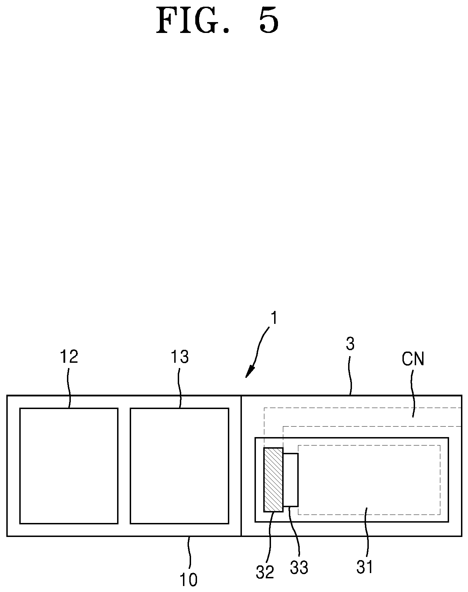

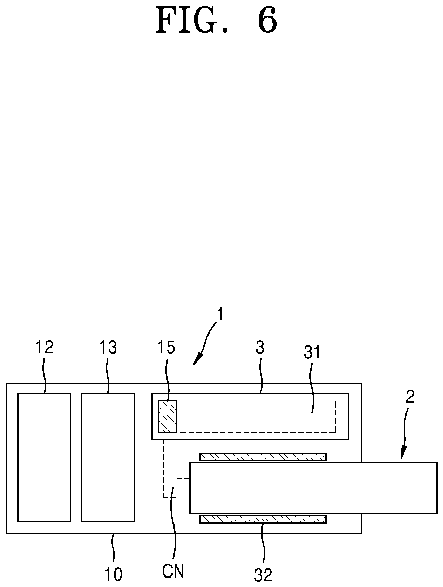

FIGs. 5 and 6 illustrate aerosol generating devices according to various embodiments.

Referring to FIG 5, the aerosol generating device 1 may include a cartridge 3 and the main body 10. The aerosol generating device 1 may include at least one of a battery 12, a controller 13 and a sensor (not shown). At least one of the battery 12 and the controller 13 may be arranged inside a main body 10 of the aerosol generating device 1. The main body 10 may be equipped with a cartridge 3 containing an aerosol generating material. The user may place a mouthpiece (not shown) provided at one end of the cartridge 3 in their mouth and inhale the aerosol.

The cartridge 3 may contain an aerosol generating material in any one of a liquid state, a solid state, a gaseous state, a gel state, and the like within a storage space 31. The aerosol generating material may include a liquid composition. For example, the liquid composition may be a liquid including a tobacco-containing material having a volatile tobacco flavor component, or a liquid including a non-tobacco material.

The cartridge 3 may be detachably coupled to the main body 10. The cartridge 3 may be mounted to the main body 10 by being coupled to the main body 10.

The main body 10 may be formed in a structure in which external air may be introduced into the main body 10 while the cartridge 3 is coupled to the main body 10. Here, the external air introduced into the main body 10 may pass through the cartridge 3 and flow into the mouth of the user.

The cartridge 3 may include a storage space 31 containing the aerosol generating material and/or a generation unit 32 The generation unit 32 may heat the aerosol generating material inside the storage space 31. The cartridge 3 may include a liquid delivery element 33 capable of absorbing the aerosol generating material. Here, the liquid delivery element 33 may include a wick or the like such as a cotton fiber, a ceramic fiber, a glass fiber, or porous ceramic. An electrically conductive track of the generation unit 32 may be formed in a coil-shaped structure that is wound around the liquid delivery element or in a structure in contact with one side of the liquid delivery element 33. The generation unit 32 may be referred to as 'a cartridge heater'.

The cartridge 3 may generate an aerosol. When the liquid delivery element 33 is heated by the generation unit 32 an aerosol may be generated. The aerosol may be inhaled into the mouth of the user through an air flow channel CN.

The air flow channel CN may be provided in the cartridge 3. The air flow channel CN may connect the generation unit 32 of the cartridge 3 to the exterior of the cartridge 3. One end of the air flow channel CN may be open to the generation unit 32, while the other end may be connected to the exterior. For example, the air flow channel CN may extend along the longitudinal direction of the cartridge 3 from the one side of the storage space 31 of the cartridge 3. For example, the air flow channel CN may pass through the cartridge 3 and extend along the longitudinal direction of the cartridge 3.

Referring to FIG 6, the aerosol generating device 1 according to an embodiment may accommodate the aerosol generating article 2. For example, the aerosol generating article 2 may be accommodated in the cartridge 3. As another example, the aerosol generating article 2 may be accommodated in the main body 10.

The aerosol generating article 2 may allow the aerosol generated by the generation unit 32 to pass through. The aerosol generating device 1 may include an article accommodation portion that accommodates the aerosol generating article 2. The aerosol generated inside the generation unit 32 may pass through the aerosol generating article 2 accommodated in the article accommodation portion and be discharged to the exterior of the aerosol generating device 1. At this time, the user may place their mouth on the aerosol generating article 2 and inhale the aerosol discharged to the exterior of the aerosol generating device 1 through the aerosol generating article 2.

Referring to FIG 6, the aerosol generating device 1 further include an aerosol generator 15 for heating the aerosol generating article 2. The aerosol generator 15 may heat the aerosol generating article 2. The aerosol generator 15 may extend longitudinally upward around the space into which the aerosol generating article 2 is inserted. The aerosol generator 15 may include an electrically resistive heater and/or an induction heater.

The controller 13 may control overall operations of the aerosol-generating device 1. The controller 13 may be mounted on a printed circuit board (PCB). The controller 13 may control an operation of at least one of the cartridge 3, the battery 12 or the sensor. For example, the controller 13 may control the operation of components such as a display (not shown), an audio output device (not shown), a haptic unit (not shown), and an actuator (motor) (not shown), etc. installed in the aerosol generating device 1. The controller 13 may check a state of each of the components of the aerosol-generating device 1 to determine whether the aerosol generating device 1 is in an operable state.

The controller 13 may analyze a result detected by the sensor and control processes to be performed subsequently. For example, the controller 13 may control the power supplied to the generation unit 32 such that the operation of the generation unit 32 starts or ends based on a result detected by the sensor. For example, the controller 13 may control an amount of power supplied to the generation unit 32 and a time for which the power is supplied to the generation unit 32 such that the generation unit 32 may be heated to a certain temperature or maintained at an appropriate temperature based on the result detected by the sensor.

The battery 12 may supply power to the components of the aerosol-generating device 1. For example, the battery 12 may supply electrical power to at least one of the controller 13, the sensor (not shown), or the aerosol generator 15.

The sensor may include at least one of a temperature sensor, a puff sensor, a cartridge detection sensor or a movement detection sensor. For example, the sensor may sense at least one of the temperature of the generation unit 32, the temperature of the battery 12, or the temperature inside and outside the main body 10. For example, the sensor may sense a puff by the user. For example, the sensor may sense whether the cartridge 3 is mounted. For example, the sensor may sense a movement of the aerosol generating device 1.

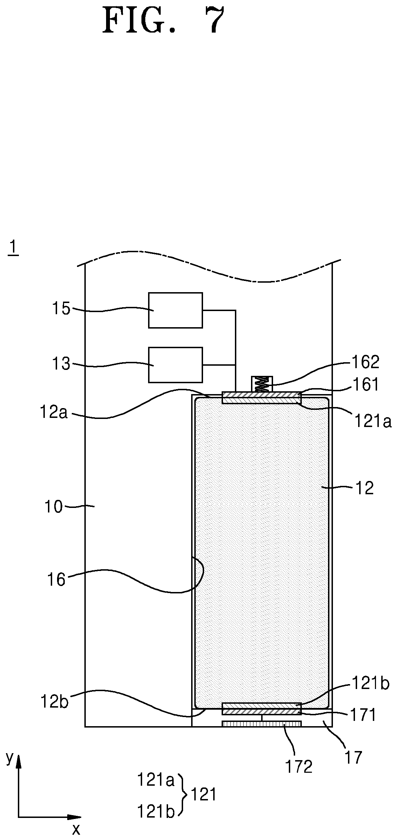

FIG. 7 is a diagram for explaining an aerosol generating device according to an embodiment of the present disclosure. FIG. 7 is a schematic cross-sectional view for explaining in detail components related to the battery 12, a battery coupling unit 16, and a battery cover 17 of the aerosol generating device 1.

The aerosol generating device 1 of the present embodiment may include the same components as the aerosol generating device 1 of any one of the embodiments described with reference to FIGS. 1 to 6, but is not limited thereto. To avoid repetitive explanation, descriptions of components identical or similar to the aerosol generating device 1 of any one of the embodiments described with reference to FIGS. 1 to 6 may be omitted.

The size, volume, thickness, distance between components, ratio, etc. of the components depicted in the drawings of the present disclosure may be exaggerated for the purpose of explanation. The technical idea of the present disclosure is not limited by the physical size, volume, thickness, ratio, etc. of the components illustrated in the drawings.

The aerosol generating device 1 may include a main-body 10. The main-body 10 may form an exterior that includes a space therein.

The aerosol generating device 1 may further include the detachable battery 12, an aerosol generator 15, the battery coupling unit 16, and the battery cover 17.

The battery 12 may be detachably coupled to the battery coupling unit 16. The battery 12 may include a battery electrode 121. The battery electrode 121 of the battery 12 may supply power to other components of the aerosol generating device 1. The battery electrode 121 may include a + pole and a - pole. The battery 12 may include a plurality of battery electrodes 121. For example, the battery 12 may include a first battery electrode 121a and a second battery electrode 121b. In addition to the first battery electrode 121a and the second battery electrode 121b, the battery 12 may include a greater number of electrodes, and the number of battery electrodes 121 included in the battery 12 is not limited. For example, the battery 12 may include three or four battery electrodes 121.

A shape of the battery 12 is not limited. The battery 12 may have a shape of one of polyhedrons. For example, the battery 12 may have a shape of a rectangular cuboid, but is not limited thereto. When the battery 12 has the shape of the rectangular cuboid, a first surface 12a and a second surface 12b may face in opposite directions. The first surface 12a and the second surface 12b of the battery 12 may face each other.

The battery 12 may have a shape of an elliptical cylinder. The battery 12 may have a shape of a cylinder. When the battery 12 has the shape of the elliptical cylinder or the shape of the cylinder, each of the first surface 12a and the second surface 12b may be two bottom surfaces of the elliptical cylinder or the cylinder forming the shape of the battery. The first surface 12a and the second surface 12b may face in opposite directions. The first surface 12a and the second surface 12b of the battery 12 may face each other.

Based on the aerosol generating device 1 illustrated in FIG. 7, the first surface 12a of the battery 12 may be a surface facing in +y direction, and the second surface 12b of the battery 12 may be a surface facing in -y direction.

Each of the first battery electrode 121a and the second battery electrode 121b may be placed in different areas of the battery 12. For example, the first battery electrode 121a may be placed on the first surface 12a of the battery 12, and the second battery electrode 121b may be placed on the second surface 12b of the battery 12.

The battery coupling unit 16 may include a space into which the battery 12 may be coupled. The battery coupling unit 16 may be placed in an area inside the main-body 10. A main-body electrode 161 may be placed in an area inside the battery coupling unit 16. The main-body electrode 161 may be configured to be electrically connected to the battery 12. The main-body electrode 161 may receive electrical current from the battery 12 and transmit the electrical current to other components of the aerosol generating device 1. For example, at least some of a controller 13, a sensor (not shown), and the aerosol generator 15 may receive electrical current from the battery 12 through the main-body electrode 161.

The main-body electrode 161 may be electrically connected to at least one of the battery electrodes 121 of the battery 12 that is coupled with the battery coupling unit 16. For example, the main-body electrode 161 may be selectively electrically connected to either the first battery electrode 121a or the second battery electrode 121b. The main-body electrode 161 may receive power from either the first battery electrode 121a or the second battery electrode 121b.

According to the present disclosure, since the main-body electrode 161 may receive power from the battery 12 only by electrical connection with either the first battery electrode 121a or the second battery electrode 121b, the degree of freedom in the coupling direction of the battery 12 coupled to the battery coupling unit 16 may be improved.

According to the present disclosure, even though the battery 12 is coupled to the battery coupling unit 16 in a direction different from the direction shown in FIG. 1, the main-body electrode 161 may receive power from the battery 12.

For example, referring to FIG. 7, the battery 12 may be coupled to the battery coupling unit 16 such that the first surface 12a faces the +y direction and the first battery electrode 121a may be electrically connected to the main-body electrode 161, and thus, power of the battery 12 may be supplied to the main-body electrode 161 through the first battery electrode 121a.

As another example, unlike that illustrated in FIG. 7, the battery 12 may be coupled to the battery coupling unit 16 such that the second surface 12b faces the +y direction and the second battery electrode 121b may be electrically connected to the main-body electrode 161, and thus, power of the battery 12 may be supplied to the main-body electrode 161 through the second battery electrode 121b.

Therefore, the coupling direction of the battery 12 that may supply power to the main-body electrode 161 is not limited to the coupling direction shown in FIG. 7. Even when the battery 12 is coupled to the battery coupling unit 16 in a state where top and bottom of the battery 12 are reversed from the direction shown in FIG. 7, the battery 12 may supply power to the main-body electrode 161 and thus, the aerosol generating device 1 may operate without any trouble.

According to the present disclosure, the user may operate the aerosol generating device 1 by coupling the battery 12 with the battery coupling unit 16 without paying attention to the coupling direction of the battery 12, thereby improving the user's convenience and experience.

The aerosol generating device 1 may include the battery cover 17 that may selectively open or close the battery coupling unit 16. The battery cover 17 may be detachably coupled with the main-body 10.

Referring to FIG. 7, the battery 12 may be placed inside the battery coupling unit 16, the battery cover 17 may be in a closed position, and the battery cover 17 closes the battery coupling unit 16 so that the battery 12 is not exposed to the outside.

The battery cover 17 may be placed in an area of the main-body 10. The battery cover 17 may be placed in an area corresponding to the battery coupling unit 16. For example, the battery cover 17 may be detachably coupled to the battery coupling unit 16 in a position where the battery coupling unit 16 is opened in the -y direction.

Referring to FIG. 7, the battery cover 17 may extend in a direction transverse to the longitudinal direction (i.e., ±y direction) of the main-body 10. The battery cover 17 may open or close the battery coupling unit 16 in the longitudinal direction of the main-body 10.

The battery cover 17 may be moved to the closed position, in which the battery coupling unit 16 may be closed from the outside, to close the battery coupling unit 16 from the outside. The battery cover 17 may be moved out of the closed position to allow the battery coupling unit 16 to be opened toward the outside.

The battery cover 17 may be coupled with the main-body 10 in the closed position where the battery coupling unit 16 is closed. The battery cover 17 may be separated from the main-body 10 by being moved out of the closed position.

When the battery cover 17 is moved to the closed position and coupled with the main-body 10, the battery coupling unit 16 may be closed against the outside. In such a case, a battery (not shown) may not be coupled with or separated from the battery coupling unit 16, and foreign substances from the outside of the aerosol generating device 1 may be prevented from entering the battery coupling unit 16.

When the battery cover 17 is separated from the main-body 10, the battery coupling unit 16 may be opened toward the outside, so that the battery 12 may be coupled to the battery coupling unit 16 or the battery 12 may be removed from the battery coupling unit 16.

The aerosol generating device 1 may further include an elastic body 162. The elastic body 162 may be connected to the main-body electrode 161. The elastic body 162 may apply elastic force to the main-body electrode 161 to press the main-body electrode 161. The elastic body 162 may press the main-body electrode 161 toward the battery 12. By means of the elastic body 162, the main-body electrode 161 may more stably contact and/or be coupled with the battery electrode 121 of the battery 12. By means of the elastic body 162, the main-body electrode 161 may be electrically connected more stably to the battery electrode 121 of the battery 12.

The main-body electrode 161 may include a pogo pin pressed by the elastic body 162 or may be the pogo pin itself.

The elastic body 162 may stably fix the battery 12 within the battery coupling unit 16 without shaking. A size of the battery 12 coupled to the battery coupling unit 16 may vary depending on the battery 12. By arranging the elastic body 162, the battery 12 may be stably placed in the battery coupling unit 16 regardless of the size of the battery 12. By arranging the elastic body 162, the degree of freedom in the size of the battery 12 that may be coupled to the battery coupling unit 16 may increase.

The elastic body 162 may press the battery 12 coupled to the battery coupling unit 16. The elastic body 162 may be placed inside the battery coupling unit 16. One or more elastic bodies 162 may be arranged.

A cover electrode 171 and a charging terminal 172 may be placed on the battery cover 17.

The cover electrode 171 may be a component that electrically connects the charging terminal 172 to the battery electrode 121. The cover electrode 171 may be selectively electrically connected to either the first battery electrode 121a or the second battery electrode 121b. The cover electrode 171 may connect either the first battery electrode 121a or the second battery electrode 121b, to the charging terminal 172.

The charging terminal 172 may be a component that charges the battery 12 by supplying power from an external charger (not shown) to the battery 12. The cover electrode 171 may supply power to the battery 12 through the first battery electrode 121a or the second battery electrode 121b.

According to the present disclosure, since the cover electrode 171 may supply power from the battery 12 only by electrical connection with either the first battery electrode 121a or the second battery electrode 121b, the degree of freedom in the coupling direction of the battery 12 coupled to the battery coupling unit 16 may increase.

According to the present disclosure, even though the battery 12 is coupled to the battery coupling unit 16 in a direction different from the direction shown in FIG. 1, the cover electrode 171 may supply power to the battery 12.

For example, when the first surface 12a of the battery 12 is coupled to the battery coupling unit 16 so that the first surface 12a faces the +y direction, the second battery electrode 121b may be electrically connected to the cover electrode 171, and power may be supplied to the battery 12 through the second battery electrode 121b.

As another example, when the second surface 12b of the battery 12 is coupled to the battery coupling unit 16 so that the second surface 12b faces the +y direction, the first battery electrode 121a may be electrically connected to the cover electrode 171, and power may be supplied to the battery 12 through the first battery electrode 121a.

Therefore, the coupling direction of the battery 12 that may charge the battery 12 is not limited to the coupling direction shown in FIG. 1. Even when the battery 12 is coupled to the battery coupling unit 16 in a state where top and bottom of the battery 12 are reversed from the direction shown in FIG. 1, the battery 12 may receive power from the cover electrode 171.

According to the present disclosure, the user may operate the aerosol generating device 1 by coupling the battery 12 to the battery coupling unit 16 without paying attention to the coupling direction of the battery 12, thereby improving the user's convenience and experience.

The aerosol generating device 1 may further include a cradle (not shown). The aerosol generating device 1 may constitute a system together with the separate cradle. The cradle may include a charger that charges the battery 12. For example, the cradle may charge the battery 12 of the aerosol generating device 1. Alternatively, the aerosol generator 15 may be heated while the cradle is coupled with the aerosol generating device 1.

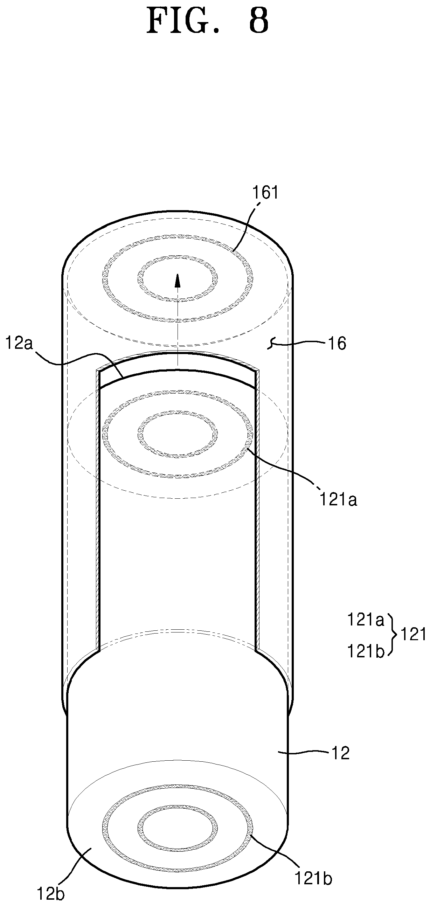

FIG. 8 is a drawing for explaining in detail the battery 12 and the battery coupling unit 16 of the aerosol generating device according to an embodiment of the present disclosure.

The battery 12 and the battery coupling unit 16 of FIG. 8 may be components identical or similar to the battery 12 and the battery coupling unit 16 of the embodiment described above with reference to FIG. 7.

For convenience of explanation, the illustration of components other than the battery 12 and the battery coupling unit 16 is omitted in FIG. 8.

The battery 12 may include a curved surface. For example, the battery 12 may have the shape of cylinder, but the shape of the battery 12 is not limited thereto.

When the battery 12 has the shape of cylinder, each of the first surface 12a and the second surface 12b may be a bottom surface of the cylinder forming the shape of the battery. The first surface 12a and the second surface 12b may face in opposite directions. The first surface 12a and the second surface 12b of the battery 12 may face each other.

According to an embodiment of the present disclosure, at least a portion of an inner surface of the battery coupling unit 16 may be curved, but is not limited thereto.

The main-body electrode 161 may be placed in an area inside the battery coupling unit 16. The main-body electrode 161 may be a component for electrically connecting to the battery 12. The main-body electrode 161 may receive current from the battery 12 and transmit the current to other components of the aerosol generating device 1. For example, at least some of a controller (not shown), a sensor (not shown), and an aerosol generator (not shown) may receive current from the battery 12 through the main-body electrode 161.

The main-body electrode 161 may be electrically connected to at least one of the battery electrodes 121 of the battery 12 that is coupled with the battery coupling unit 16. For example, the main-body electrode 161 may be selectively electrically connected to either the first battery electrode 121a or the second battery electrode 121b. The main-body electrode 161 may receive power from either the first battery electrode 121a or the second battery electrode 121b.

According to the present disclosure, since the main-body electrode 161 may receive power from the battery 12 only by electrical connection with either the first battery electrode 121a or the second battery electrode 121b, the degree of freedom in the coupling direction of the battery 12 coupled to the battery coupling unit 16 may increase.

According to the present disclosure, even though the battery 12 is connected to the battery coupling unit 16 in a direction different from the direction shown in FIG. 1, the main-body electrode 161 may receive power from the battery 12.

For example, referring to FIG. 8, the battery 12 may be coupled to the battery coupling unit 16 such that the first surface 12a faces the +y direction and the first battery electrode 121a may be electrically connected to the main-body electrode 161, and thus power of the battery 12 may be supplied to the main-body electrode 161 through the first battery electrode 121a.

As another example, unlike that illustrated in FIG. 8, the battery 12 may be coupled to the battery coupling unit 16 such that the second surface 12b faces the -y direction and the second battery electrode 121b may be electrically connected to the main-body electrode 161, and thus, power of the battery 12 may be supplied to the main-body electrode 161 through the second battery electrode 121b.

Therefore, the coupling direction of the battery 12 that may supply power to the main-body electrode 161 is not limited to the coupling direction shown in FIG. 8. Even when the battery 12 is coupled to the battery coupling unit 16 in a state where top and bottom of the battery 12 are reversed from the direction shown in FIG. 8, the battery 12 may supply power to the main-body electrode 161 and thus, the aerosol generating device 1 may operate without any trouble.

According to the present disclosure, the user may operate the aerosol generating device 1 by coupling the battery 12 to the battery coupling unit 16 without paying attention to the coupling direction of the battery 12, thereby improving the user's convenience and experience.

The shape of the battery electrode 121 and the shape of the main-body electrode 161 may have shapes that correspond to each other so that they may be electrically connected. The main-body electrode 161 may be circular. The main-body electrode 161 may include a circular electrode of +pole and a circular electrode of -pole. The battery electrode 121 may have the shape of circular corresponding to the shape of the main-body electrode 161. The battery electrode 121 may include a circular electrode of +pole and a circular electrode of -pole.

According to an embodiment described with reference to FIG. 8, when the battery 12 has the shape of cylinder, the battery electrode 121 and the main-body electrode 161 may be formed in a circular shape, so that the degree of freedom of the coupling direction of the battery 12 may further increase. The battery 12 may be coupled with the battery coupling unit 16 regardless of the left-right direction (i.e., ±x direction) as well as the up-down direction (i.e., ±y direction), to operate the aerosol generating device 1.

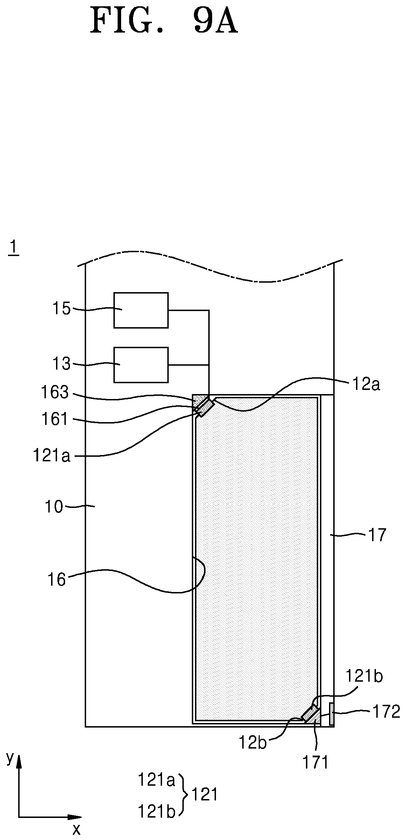

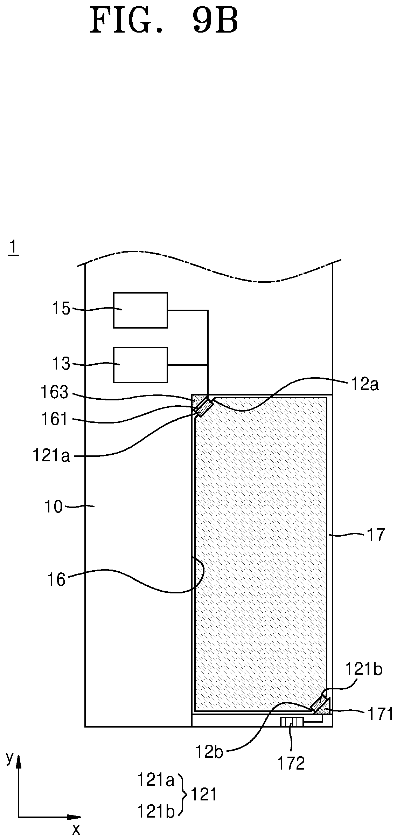

FIGS. 9A and 9B are diagrams for explaining an aerosol generating device according to an embodiment of the present disclosure.

The aerosol generating device 1 of the present embodiment may include the same components as the aerosol generating device 1 of any one of the embodiments described with reference to other drawings, but is not limited thereto.

FIGS. 9A and 9B are schematic cross-sectional views explaining in detail components related to a battery 12, a battery coupling unit 16, and a battery cover 17 of an aerosol generating device 1.

To avoid repetitive explanation, descriptions of components identical or similar to the aerosol generating device 1 of any one of the embodiments described with reference to other drawings may be omitted.

Referring to FIGS. 9A and 9B, the battery 12 may be coupled with the battery coupling unit 16. As described above with reference to FIG. 7, the battery coupling unit 16 may be opened or closed by the battery cover 17.

When the battery coupling unit 16 is opened, the battery 12 may be inserted into the inside of the battery coupling unit 16 or discharged to the outside of the battery coupling unit 16.

After the battery 12 is inserted into the inside of the battery coupling unit 16, when the battery cover 17 is moved to the closed position and the battery coupling unit 16 is closed, the battery 12 may be fixed inside the battery coupling unit 16.

Referring to FIGS. 9A and 9B, the battery 12 may be placed inside the battery coupling unit 16, the battery cover 17 may be in the closed position, and the battery cover 17 closes the battery coupling unit 16 so that the battery 12 is not exposed to the outside.

An extension direction of the battery cover 17 of the aerosol generating device 1 is not limited.

For example, referring to FIG. 9A, the battery cover 17 may extend in a direction identical or similar to the longitudinal direction (i.e., ±y direction) of the main-body 10. The battery cover 17 may open or close the battery coupling unit 16 in a direction transverse to the longitudinal direction of the main-body 10. In this case, when the battery coupling unit 16 is opened by the battery cover 17, the battery coupling unit 16 may be opened in the direction transverse to the longitudinal direction of the main-body 10.

As another example, referring to FIG. 9B, the battery cover 17 may extend in the direction transverse to the longitudinal direction (i.e., ±y direction) of the main-body 10. The battery cover 17 may open or close the battery coupling unit 16 in the longitudinal direction of the main-body 10. In this case, when the battery coupling unit 16 is opened by the battery cover 17, the battery coupling unit 16 may be opened in the direction identical or similar to the longitudinal direction of the main-body 10.

A main-body electrode 161 may be placed in an area inside the battery coupling unit 16. The main-body electrode 161 may be a component for being electrically connected to the battery 12. The main-body electrode 161 may receive electrical current from the battery 12 and transmit the electrical current to other components of the aerosol generating device 1.

The battery electrode 121 may be placed in an area of the battery 12. The battery electrode 121 may be a component for electrically connecting to the main-body electrode 161. The battery electrode 121 may supply electrical current to other components of the aerosol generating device 1 through the main-body electrode 161. The battery 12 may include a plurality of battery electrodes 121. For example, the battery 12 may include the first battery electrode 121a and the second battery electrode 121b. In addition to the first battery electrode 121a and the second battery electrode 121b, the battery 12 may include a greater number of electrodes, and the number of battery electrodes 121 included in the battery 12 is not limited.

The battery 12 may have a plurality of surfaces. Among the surfaces of the battery 12, the first surface 12a and the second surface 12b may be inclined surfaces that form a predefined angle with respect to the longitudinal direction of the battery 12. The first battery electrode 121a arranged on the first surface 12a may be arranged at an angle similar to the first surface 12a, and the second battery electrode 121b arranged on the second surface 12b may be arranged at an angle similar to the second surface 12b.

When the battery 12 is coupled to the battery coupling unit 16, the aerosol generating device 1 may include a main-body inclined surface 163 positioned at a position that faces the first surface 12a or the second surface 12b. The main-body inclined surface 163 may be inclined at an angle corresponding to the degree to which the first surface 12a or the second surface 12b of the battery 12 coupled to the battery coupling unit 16 is inclined.

The main-body electrode 161 may be placed on the main-body inclined surface 163. The main-body electrode 161 positioned on the main-body inclined surface 163 may be inclined in the same manner as the main-body inclined surface 163.

When the battery 12 is coupled to the battery coupling unit 16, the main-body electrode 161 and the battery electrode 121 that are inclined at a predefined angle with respect to the longitudinal direction of the battery 12 may be electrically connected to each other.

Since the battery electrode 121 may be arranged to be inclined at the predefined angle with respect to the longitudinal direction of the battery 12, and the main-body electrode 161 may be also arranged to be inclined at the predefined angle with respect to the longitudinal direction of the battery 12, the degree of freedom in an insertion direction of the battery 12 to be coupled to the battery coupling unit 16 may increase, and damage against the main-body electrode 161 and/or the battery electrode 121 may be prevented.

For example, when the main-body electrode 161 is arranged toward the -y direction as shown in FIG. 7, there is no problem when the battery 12 moves in the +y direction to be coupled with the battery coupling unit 16. However, when the battery (12) moves in the -x direction to be coupled with the battery coupling unit 16, a protruding area of the main-body electrode 161 may be damaged by the battery 12, and even when the protrusion of the main-body electrode 161 is too big, the battery 12 may be caught on the main-body electrode 161, making it difficult for the battery 12 to be coupled with the battery coupling unit 16.

Referring to FIG. 9A, when the battery cover 17 is moved to the open position, the battery 12 may be coupled to the battery coupling unit 16 in the -x direction. At this time, the main-body electrode 161 may be arranged obliquely in the longitudinal direction of the battery 12, and the battery electrode 121 may also be arranged obliquely in the longitudinal direction of the battery 12, so that the main-body electrode 161 may be electrically connected to the battery electrode 121. At this time, there is little concern that the inclined main-body electrode 161 will be damaged by the battery 12, and there is also little concern that the coupling between the main-body electrode 161 and the battery 12 will be interfered.

For another example, referring to FIG. 9B, when the battery cover 17 is moved to the open position, the battery 12 may be coupled to the battery coupling unit 16 in the +y direction. At this time, the main-body electrode 161 may be arranged obliquely in the longitudinal direction of the battery 12, and the battery electrode 121 may also be arranged obliquely in the longitudinal direction of the battery 12, so that the main-body electrode 161 may be electrically connected to the battery electrode 121. At this time, there is little concern that the inclined main-body electrode 161 will be damaged by the battery 12, and there is also little concern that the coupling between the main-body electrode 161 and the battery 12 will be interfered.

In summary, since the battery electrode 121 and the main-body electrode 161 are arranged at an angle with respect to the longitudinal direction of the battery 12, the degree of freedom in the coupling direction of the battery 12 may increase, and the possibility of damage against the main-body electrode 161 by the battery 12 may decrease.

A cover electrode 171 and a charging terminal 172 may be placed on the battery cover 17.

The cover electrode 171 may be a component that electrically connects the charging terminal 172 to the battery electrode 121. The cover electrode 171 may be selectively electrically connected to either the first battery electrode 121a or the second battery electrode 121b. The cover electrode 171 may connect either the first battery electrode 121a or the second battery electrode 121b, to the charging terminal 172.

The cover electrode 171 may be positioned at a predefined angle with respect to the longitudinal direction of the battery 12. The cover electrode 171 may be inclined at a predefined angle with respect to the longitudinal direction of the battery 12, so that the cover electrode 171 may be electrically connected to the battery electrode 121 that may be also inclined with respect to the longitudinal direction of the battery 12.

The charging terminal 172 may be a component that charges the battery 12 by supplying power from an external charger (not shown) to the battery 12. The cover electrode 171 may supply power to the battery 12 through the first battery electrode 121a or the second battery electrode 121b.

According to the present disclosure, since the cover electrode 171 may supply power from the battery 12 only by electrical connection with either the first battery electrode 121a or the second battery electrode 121b, the degree of freedom in the coupling direction of the battery 12 coupled to the battery coupling unit 16 may increase.

According to the present disclosure, even though the battery 12 is coupled to the battery coupling unit 16 in a direction different from the direction shown in FIG. 1, the cover electrode 171 may supply power to the battery 12.

For example, when the first surface 12a of the battery 12 is coupled to the battery coupling unit 16 so that the first surface 12a faces the +y direction, the second battery electrode 121b may be electrically connected to the cover electrode 171, and power may be supplied to the battery 12 through the second battery electrode 121b.

As another example, when the second surface 12b of the battery 12 is coupled to the battery coupling unit 16 so that the second surface 12b faces the +y direction, the first battery electrode 121a may be electrically connected to the cover electrode 171, and power may be supplied to the battery 12 through the first battery electrode 121a.

Therefore, the coupling direction of the battery 12 that may charge the battery 12 is not limited to the coupling direction shown in FIG. 1. Even when the battery 12 is coupled to the battery coupling unit 16 in a state where top and bottom of the battery 12 are reversed from the direction shown in FIG. 1, the battery 12 may receive power from the cover electrode 171.

According to the present disclosure, the user may operate the aerosol generating device 1 by coupling the battery 12 to the battery coupling unit 16 without paying attention to the coupling direction of the battery 12, thereby improving the user's convenience and experience.

The aerosol generating device 1 may further include a cradle (not shown). The aerosol generating device 1 may constitute a system together with the separate cradle. The cradle may include a charger that charges the battery 12. For example, the cradle may charge the battery 12 of the aerosol generating device 1. Alternatively, the aerosol generator 15 may be heated while the cradle is coupled with the aerosol generating device 1.

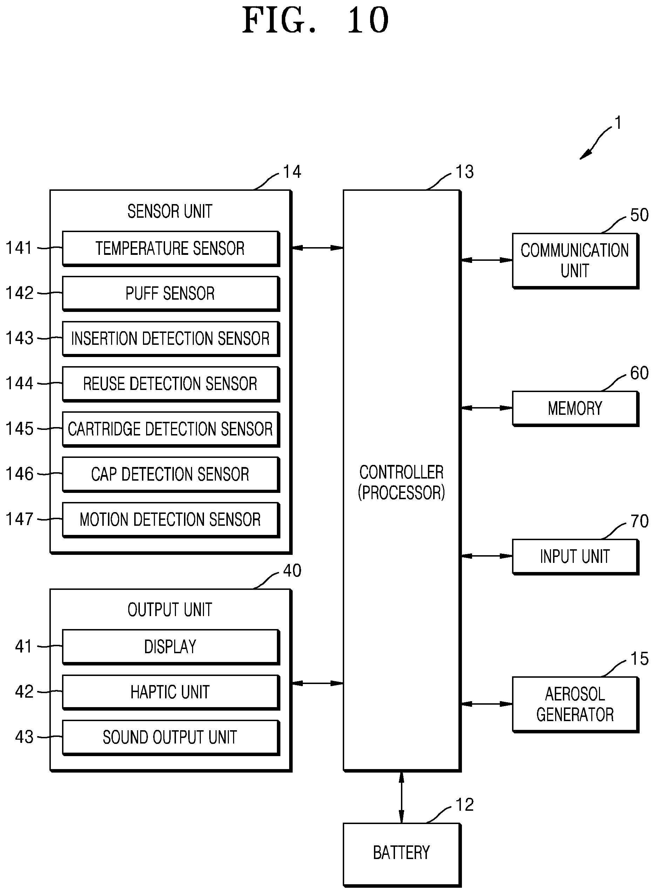

FIG. 10 is a block diagram of an aerosol generating device according to an embodiment.

The aerosol generating device 1 may include a battery 12, a controller 13, a sensor unit 14, an output unit 40, an input unit 70, a communicator 50, a memory 60, and at least one aerosol generator 15. The aerosol generator 15 may be a stick heater and/or a cartridge heater. However, an internal structure of the aerosol generating device 1 is not limited to that illustrated in FIG. 10. In other words, according to the design of the aerosol generating device 1, one of ordinary skill in the art related to the present embodiment that some of the components shown in FIG. 10 may be omitted or new components may be added.

The sensor unit 14 may detect a state of the aerosol generating device 1 or a state around the aerosol generating device 1 and transmit detected information to the controller 13. On the basis of the detected information, the controller 13 may control the aerosol generating device 1 to perform various functions such as control of operations of the cartridge aerosol generator 15 and/or the aerosol generator 15, a restriction on smoking, determination of whether or not the stick and/or the cartridge 19 are inserted, and a notification display.

The sensor unit 14 may include at least one of a temperature sensor 141, a puff sensor 142, an insertion detection sensor 143, a reuse detection sensor 144, a cartridge detection sensor 145, a cap detection sensor 146, and a motion detection sensor 147.

The temperature sensor 141 may detect a temperature at which the cartridge aerosol generator 15 and/or the aerosol generator 15 are heated. The aerosol generating device 1 may include a separate temperature sensor for detecting the temperatures of the cartridge aerosol generator 15 and/or the aerosol generator 15, or the cartridge aerosol generator 15 and/or the aerosol generator 15 may operate as temperature sensors.

The temperature sensor 141 may output a signal corresponding to the temperature of the cartridge aerosol generator 15 and/or the aerosol generator 15. For example, the temperature sensor 141 may include a resistor element whose resistance value changes in correspondence to a change in the temperature of the cartridge aerosol generator 15 and/or the aerosol generator 15. The temperature sensor 141 may be implemented by a thermistor or the like, which is an element using a property of changing resistance according to temperature. Here, the temperature sensor 141 may output a signal corresponding to the resistance value of the resistor element as a signal corresponding to the temperature of the cartridge aerosol generator 15 and/or the aerosol generator 15. For example, the temperature sensor 141 may include a sensor that detects a resistance value of the cartridge aerosol generator 15 and/or the aerosol generator 15. Here, the temperature sensor 141 may output a signal corresponding to the resistance value of the cartridge aerosol generator 15 and/or the aerosol generator 15 as a signal corresponding to the temperature of the cartridge aerosol generator 15 and/or the aerosol generator 15.

The temperature sensor 141 may be arranged around the battery 12 to monitor a temperature of the battery 12. The temperature sensor 141 may be arranged adjacent to the battery 12. For example, the temperature sensor 141 may be attached to one surface of a battery that is the battery 12. For example, the temperature sensor 141 may be mounted on one surface of a PCB.

The temperature sensor 141 may be arranged inside the body to detect an internal temperature of the body.

The puff sensor 142 may detect a puff by a user on the basis of various physical changes in an air flow path. The puff sensor 142 may output a signal corresponding to the puff. For example, the puff sensor 142 may be a pressure sensor. The puff sensor 142 may output a signal corresponding to internal pressure of the aerosol generating device 1. Here, the internal pressure of the aerosol generating device 1 may correspond to pressure of the air flow path through which a gas flows. The puff sensor 142 may be arranged in correspondence to the air flow path through which the gas flows in the aerosol generating device 1.

The insertion detection sensor 143 may detect insertion and/or removal of the stick. The insertion detection sensor 143 may detect a signal change due to the insertion and/or removal of the stick. The insertion detection sensor 143 may be installed around an insertion space. The insertion detection sensor 143 may detect the insertion and/or removal of the stick according to a change in a dielectric constant inside the insertion space. For example, the insertion detection sensor 143 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick including a metal wrapper is inserted into the insertion space, the electromagnetic characteristic around the conductor may be changed by the wrapper of the stick.

The reuse detection sensor 144 may detect whether or not the stick is reused. The reuse detection sensor 144 may be a color sensor. The color sensor may detect a color of the stick. The color sensor may detect a color of a portion of the wrapper wrapping the outside of the stick. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick may have a color changing by an aerosol. When the stick is inserted into the insertion space, the reuse detection sensor 144 may be arranged in correspondence to a location at which at least the portion of the wrapper whose color changes by the aerosol is arranged. For example, before the stick is used by the user, the color of at least the portion of the wrapper may be a first color. Here, when at least the portion of the wrapper is wetted by the aerosol while the aerosol generated by the aerosol generating device 1 passes through the stick, the color of at least the portion of the wrapper may be changed to a second color. The color of at least the portion of the wrapper may be maintained in the second color after changing from the first color to the second color.

The cartridge detection sensor 145 may detect mounting and/or removal of the cartridge 19. The cartridge detection sensor 145 may be implemented by an inductance-based sensor, a capacitive sensor, a resistance sensor, a hall sensor (a hall IC) using a hall effect, or the like.

The cap detection sensor 146 may detect mounting and/or removal of a cap. When the cap is detached from the body, a portion of the cartridge 19 and the body covered by the cap may be exposed to the outside. The cap detection sensor 146 may be implemented by a contact sensor, a hall sensor (a hall IC), an optical sensor, or the like.

The motion detection sensor 147 may detect a motion of the aerosol generating device 1. The motion detection sensor 147 may be implemented as at least one of an acceleration sensor and a gyro sensor.

In addition to the sensors 141 to 147 described above, the sensor unit 14 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 40 may output information regarding the state of the aerosol generating device 1 and provide the information to the user. The output unit 40 may include at least one of a display 41, a haptic unit 42, and a sound output unit 43, but is not limited thereto. When the display 41 and a touch pad form a layer structure to form a touch screen, the display 41 may be used as an input device in addition to an output device.

The display 41 (e.g., display 130 of Fig.4) may visually provide the user with information regarding the aerosol generating device 1. For example, the information regarding the aerosol generating device 1 may refer to various types of information such as a charging/discharging state of the battery 12 of the aerosol-generating device 1, a preheating state of the aerosol generator 15, the insertion/removal state of the stick and/or the cartridge 19, the mounting/removal state of the cap, and the restriction on use of the aerosol generating device 1 (e.g., detection of an abnormal article), and the display 41 may output the information to the outside. For example, the display 41 may be in the form of a light emitting diode (LED) light emitting device. For example, the display 41 may be a liquid crystal display (LCD) panel, an organic light emitting display (OLED) panel, or the like.

The haptic unit 42 may tactilely provide the user with the information regarding the aerosol generating device 1 by converting an electrical signal into a mechanical stimulus or an electrical stimulus. For example, when initial power is supplied to the cartridge aerosol generator 15 and/or the aerosol generator 15 for a set time, the haptic unit 42 may generate vibration corresponding to completion of initial preheating. The haptic unit 42 may include a vibration motor, a piezoelectric element, or an electrical stimulation device.

The sound output unit 43 may audibly provide the user with the information regarding the aerosol generating device 1. For example, the sound output unit 43 may convert the electrical signal into a sound signal and output the sound signal to the outside.

The battery 12 may supply power used to operate the aerosol generating device 1. The battery 12 may supply power so that the cartridge aerosol generator 15 and/or the aerosol generator 15 may be heated. In addition, the battery 12 may supply power needed for operations of the sensor unit 14, the output unit 40, the input unit 70, the communicator 50, and the memory 60, which are other components provided within the aerosol generating device 1. The battery 12 may be a rechargeable battery or a disposable battery. For example, the battery 12 may be a lithium polymer (LiPoly) battery, but is not limited thereto.

Although not shown in FIG. 10, the aerosol generating device 1 may further include a power protection circuit. The power protection circuit may be electrically connected to the battery 12 and may include a switching element.

The power protection circuit may cut off an electrical path for the battery 12 according to a certain condition. For example, the power protection circuit may cut off the electrical path for the battery 12 when a voltage level of the battery 12 is a first voltage or more corresponding to overcharging. For example, the power protection circuit may cut off the electrical path for the battery 12 when the voltage level of the battery 12 is less than a second voltage corresponding to overdischarge.

The aerosol generator 15 may be supplied with power from the battery 12 and heat a medium or an aerosol generating material within the stick. Although not shown in FIG. 10, the aerosol generating device 1 may further include a power conversion circuit (e.g., a DC/DC converter) that converts power of the battery 12 and supplies the converted power to the cartridge aerosol generator 15 and/or the aerosol generator 15. In addition, when the aerosol generating device 1 generates an aerosol by an induction heating method, the aerosol generating device 1 may further include a DC/AC converter that converts DC power of the battery 12 into AC power.

The controller 13, the sensor unit 14, the output unit 40, the input unit 70, the communicator 50, and the memory 60 may be supplied with power from the battery 12 to perform functions. Although not shown in FIG. 10, the aerosol generating device 1 may further include a power conversion circuit that converts power of the battery 12 and supplies the power to each of components, e.g., a low-dropout (LDO) circuit or a voltage regulator circuit. Also, although not shown in FIG. 10, a noise filter may be provided between the battery 12 and the aerosol generator 15. The noise filter may be a low pass filter. The low pass filter may include at least one inductor and a capacitor. A cutoff frequency of the low pass filter may correspond to a frequency of a high-frequency switching current applied from the battery 12 to the aerosol generator 15. The low pass filter may prevent a high-frequency noise component from being applied to the sensor unit 14, such as the insertion detection sensor 143.

In an embodiment, the cartridge aerosol generator 15 and/or the aerosol generator 15 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the aerosol generator 15 may be implemented by a metal wire, a metal plate on which an electrically conductive track is arranged, or a ceramic heating element, but is not limited thereto.

In an embodiment, the aerosol generator 15 may include an induction heater. For example, the aerosol generator 15 may include a susceptor that generates heat through a magnetic field applied by a coil to heat an aerosol generating material.

The input unit 70 may receive information input from the user or output the information to the user. For example, the input unit 70 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 41 and the touch panel may be implemented as one panel. For example, the touch panel may be inserted into the display 41 (e.g., may be a on-cell type or in-cell type). For example, the touch panel may be added on the display 41 (e.g., may be an add-on type).

Meanwhile, the input unit 70 may include a button, a keypad, a dome switch, a jog wheel, a jog switch, or the like, but is not limited thereto.

The memory 60 may be hardware for storing various types of data processed within the aerosol generating device 1 and may store pieces of data processed by the controller 13 and pieces of data to be processed by the controller 13. The memory 60 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 60 may store data or the like regarding an operation time of the aerosol generating device 1, the maximum number of puffs, the current number of puffs, at least one temperature profile, and a smoking pattern of the user.

The communicator 50 may include at least one component for communication with another electronic device. For example, the communicator 50 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultra-wideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 10, the aerosol generating device 1 may further include a connection interface such as a universal serial bus (USB) interface, and may connect with another external device through the connection interface such as a USB interface to transmit and receive information or charge the power 11.

The controller 13 may control an overall operation of the aerosol generating device 1. In an embodiment, the controller 13 may include at least one processor. The processor may be implemented as an array of a plurality of logic gates or may be implemented as a combination of a general-purpose microprocessor and a memory that stores a program executable by the microprocessor. In addition, one of ordinary skill in the art to which the present embodiment pertains may understand that the processor may be implemented as other types of hardware.

The controller 13 may control the temperature of the aerosol generator 15 by controlling supply power from the battery 12 to the aerosol generator 15. The controller 13 may control the temperature of the cartridge heater and/or the stick heater on the basis of the temperature of the cartridge heater and/or the stick heater sensed by the temperature sensor 141. The controller 13 may adjust power supplied to the cartridge aerosol generator 15 and/or the aerosol generator 15, on the basis of the temperature of the cartridge aerosol generator 15 and/or the aerosol generator 15. For example, the controller 13 may determine a target temperature for the cartridge aerosol generator 15 and/or the aerosol generator 15, on the basis of a temperature profile stored in the memory 60.

The aerosol generating device 1 may include a power supply circuit (not shown) electrically connected to the battery 12 between the battery 12 and the cartridge aerosol generator 15 and/or the aerosol generator 15. The power supply circuit may be electrically connected to the cartridge aerosol generator 15, the aerosol generator 15, or an induction coil 181. The power supply circuit may include at least one switching element. The switching element may be implemented by a bipolar junction transistor (BJT), a field effective transistor (FET), or the like. The controller 13 may control the power supply circuit.

The controller 13 may control power supply by controlling switching of the switching element of the power supply circuit. The power supply circuit may be an inverter that converts DC power output from the battery 12 into AC power. For example, the inverter may include a full-bridge circuit or a half-bridge circuit including a plurality of switching elements.

The controller 13 may turn on the switching element so that power is supplied from the battery 12 to the cartridge aerosol generator 15 and/or the aerosol generator 15. The controller 13 may turn off the switching element to cut off the supply of power to the cartridge aerosol generator 15 and/or the aerosol generator 15. The controller 13 may adjust a current supplied from the battery 12 by adjusting a frequency and/or duty ratio of a current pulse input into the switching element.

The controller 13 may control a voltage output from the battery 12 by controlling switching of the switching element of the power supply circuit. The power conversion circuit may convert the voltage output from the battery 12. For example, the power conversion circuit may include a buck-converter that steps down the voltage output from the battery 12. For example, the power conversion circuit may be implemented through a buck-boost converter, a zener diode, or the like.

The controller 13 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the battery 12. The duty ratio for the on/off operation of the switching element may correspond to a ratio of the voltage output from the power conversion circuit to the voltage output from the battery 12. The level of the voltage output from the power conversion circuit may decrease with a decrease in the duty ratio for the on/off operation of the switching element. The aerosol generator 15 may be heated on the basis of the voltage output from the power conversion circuit.

The controller 13 may control power to be supplied to the aerosol generator 15 by using at least one of a pulse width modulation (PWM) method and a proportional-integral-differential (PID) method.

For example, the controller 13 may control a current pulse having a certain frequency and duty ratio to be supplied to the aerosol generator 15 by using the PWM method. The controller 13 may control the power supplied to the aerosol generator 15 by adjusting the frequency and duty ratio of the current pulse.

For example, the controller 13 may determine a target temperature to be controlled, on the basis of the temperature profile. The controller 13 may control the power supplied to the aerosol generator 15 by using the PID method, which is a feedback control method through a difference value between the temperature of the aerosol generator 15 and the target temperature, a value obtained by integrating the difference value over time, and a value obtained by differentiating the difference value over time.

The controller 13 may prevent the cartridge heater and/or the stick heater from overheating. For example, on the basis that the temperature of the cartridge heater and/or the stick heater exceeds a preset limit temperature, the controller 13 may control an operation of the power conversion circuit so that the supply of power to the cartridge heater and/or the stick heater stops. For example, on the basis that the temperature of the cartridge heater and/or the stick heater exceeds the preset limit temperature, the controller 13 may reduce an amount of power supplied to the cartridge heater and/or the stick heater by a certain ratio. For example, on the basis that the temperature of the cartridge aerosol generator 15 exceeds the preset limit temperature, the controller 13 may determine that the aerosol generating material accommodated in the cartridge 19 is exhausted and cut off the power supply to the cartridge aerosol generator 15.

The controller 13 may control charging and discharging of the battery 12. The controller 13 may identify the temperature of the battery 12 on the basis of an output signal of the temperature sensor 141.

When a power line is connected to a battery terminal of the aerosol generating device 1, the controller 13 may identify whether or not the temperature of the battery 12 is a first limit temperature or more which is a reference for blocking charging of the battery 12. When the temperature of the battery 12 is less than the first limit temperature, the controller 13 may control the battery 12 to be charged, on the basis of a preset charging current. The controller 13 may block charging of the battery 12 when the temperature of the battery 12 is the first limit temperature or more.

While the power of the aerosol generating device 1 is turned on, the controller 13 may identify whether or not the temperature of the battery 12 is a second limit temperature or more which is a reference for blocking discharge of the battery 12. The controller 13 may control power stored in the battery 12 to be used when the temperature of the battery 12 is less than the second limit temperature. When the temperature of the battery 12 is the second limit temperature or more, the controller 13 may stop using the power stored in the battery 12.

The controller 13 may calculate a remaining capacity of the power stored in the battery 12. For example, the controller 13 may calculate the remaining capacity of the battery 12 on the basis of a voltage and/or current sensing value of the battery 12.

The controller 13 may determine, through the insertion detection sensor 143, whether or not the stick is inserted into the insertion space. The controller 13 may determine that the stick is inserted, on the basis of the output signal of the insertion detection sensor 143. When determining that the stick is inserted into the insertion space, the controller 13 may control power to be supplied to the cartridge aerosol generator 15 and/or the aerosol generator 15. For example, the controller 13 may supply power to the cartridge aerosol generator 15 and/or the aerosol generator 15, on the basis of the temperature profile stored in the memory 60.

The controller 13 may determine whether or not the stick is removed from the insertion space. For example, the controller 13 may determine, through the insertion detection sensor 143, whether or not the stick is removed from the insertion space. For example, when the temperature of the aerosol generator 15 is the preset limit temperature or more or when a temperature change gradient of the aerosol generator 15 is a set gradient, the controller 13 may determine that the stick is removed from the insertion space. When determining that the stick is removed from the insertion space, the controller 13 may cut off the supply of power to the cartridge aerosol generator 15 and/or the aerosol generator 15.

The controller 13 may control a power supply time and/or a power supply amount with respect to the aerosol generator 15, according to a state of the stick detected by the sensor unit 14. The controller 13 may identify, on the basis of a look-up table, a level range including a level of a signal of the capacitance sensor. The controller 13 may determine an amount of moisture in the stick, according to the identified level range.

When the stick is over-humidified, the controller 13 may increase a preheating time of the stick compared to a normal state by controlling the power supply time with respect to the aerosol generator 15.

The controller 13 may determine, through the reuse detection sensor 144, whether or not the stick inserted into the insertion space is reused. For example, the controller 13 may compare a sensing value of a signal of the reuse detection sensor 144 with a first reference range including a first color and when the sensing value is included in the first reference range, determine that the stick is not used. For example, the controller 13 may compare the sensing value of the signal of the reuse detection sensor 144 with a second reference range including a second color and when the sensing value is included in the second reference range, determine that the stick is used. When determining that the stick is used, the controller 13 may cut off the supply of power to the cartridge aerosol generator 15 and/or the aerosol generator 15.

The controller 13 may determine, through the cartridge detection sensor 145, whether or not the cartridge 19 is coupled and/or removed. For example, the controller 13 may determine whether or not the cartridge 19 is coupled or removed, on the basis of a sensing value of the signal of the cartridge detection sensor 145.

The controller 13 may determine whether or not the aerosol generating material of the cartridge 19 is exhausted. For example, the controller 13 may apply power to preheat the cartridge aerosol generator 15 and/or the aerosol generator 15, determine whether or not the temperature of the cartridge aerosol generator 15 exceeds the limit temperature in a preheating period, and when the temperature of the cartridge aerosol generator 15 exceeds the limit temperature, determine that the aerosol generating material of the cartridge 19 is exhausted. When determining that the aerosol generating material of the cartridge 19 is exhausted, the controller 13 may cut off the supply of power to the cartridge aerosol generator 15 and/or the aerosol generator 15.

The controller 13 may determine whether or not the cartridge 19 may be usable. When the current number of puffs is greater than or equal to the maximum number of puffs set in the cartridge 19, the controller 13 may determine, on the basis of data stored in the memory 60, that the cartridge 19 may not be usable. For example, when the total time for which the aerosol generator 15 is heated is a preset maximum time or more or the total amount of power supplied to the aerosol generator 15 is a preset maximum amount of power or more, the controller 13 may determine that the cartridge 19 may not be usable.

The controller 13 may determine inhalation by the user through the puff sensor 142. For example, the controller 13 may determine whether or not a puff occurs, on the basis of a sensing value of a signal of the puff sensor 142. For example, the controller 13 may determine an intensity of the puff, on the basis of the sensing value of the signal of the puff sensor 142. When the number of puffs reaches the preset maximum number of puffs or when puffs are not detected for a preset time or more, the controller 13 may cut off the supply of power to the cartridge aerosol generator 15 and/or the aerosol generator 15.

The controller 13 may determine, through the cap detection sensor 146, whether a cap is coupled and/or removed. For example, the controller 13 may determine whether or not the cap is coupled and/or removed, on the basis of a sensing value of a signal of the cap detection sensor 146.

The controller 13 may control the output unit 40 on the basis of the result of detection by the sensor unit 14. For example, when the number of puffs counted through the puff sensor 142 reaches a preset number, the controller 13 may notify the user that the aerosol generating device 1 is soon terminated, through at least one of the display 41, the haptic unit 42, and the sound output unit 43. For example, the controller 13 may notify the user through the output unit 40 that the stick is not present in the insertion space, on the basis of the determination that the stick is not present in the insertion space. For example, the controller 13 may notify the user through the output unit 40 that the cartridge 19 and/or the cap are not mounted, on the basis of the determination that the cartridge 19 and/or the cap are not mounted. For example, the controller 13 may transmit information regarding the temperature of the cartridge heater and/or the stick heater to the user through the output unit 40.

The controller 13 may store and update, in the memory 60, a history of a certain event that occurs, on the basis of the occurrence of the event. The event may include detection of insertion of the stick, initiation of heating of the stick, detection of puffs, termination of the puffs, detection of overheating of the cartridge aerosol generator 15 and/or the aerosol generator 15, detection of application of an overvoltage to the cartridge aerosol generator 15 and/or the aerosol generator 15, termination of heating of the stick, an operation such as power on/off of the aerosol generating device 1, initiation of charging of the battery 12, detection of overcharging of the battery 12, termination of charging of the battery 12, and the like. The history of the event may include a date and time when the event occurs, log data corresponding to the event, and the like. For example, when the certain event is the detection of insertion of the stick, the log data corresponding to the event may include data regarding the sensing value of the insertion detection sensor 143 and the like. For example, when the certain event is the detection of overheating of the cartridge aerosol generator 15 and/or the aerosol generator 15, the log data corresponding to the event may include data regarding the temperature of the cartridge aerosol generator 15 and/or the aerosol generator 15, the voltage applied to the cartridge aerosol generator 15 and/or the aerosol generator 15, a current flowing through the cartridge aerosol generator 15 and/or the aerosol generator 15, and the like.

The controller 13 may control to form a communication link with an external device such as a mobile terminal of the user. When data regarding authentication is received from the external device through the communication link, the controller 13 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 13 may release the restriction on the use of at least one function of the aerosol generating device 1. For example, when the user authentication is completed, the controller 13 may release a restriction on use of a heating function of supplying power to the aerosol generator 15.

The controller 13 may transmit data regarding the state of the aerosol generating device 1 to the external device through the communication link formed with the external device. On the basis of the received data regarding the state of the aerosol generating device 1, the external device may output the remaining capacity of the battery 12 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 13 may control at least one of output devices to perform an operation corresponding to the location search, on the basis of the received location search request. For example, the haptic unit 42 may generate vibration in response to the location search request. For example, the display 41 may output an object corresponding to the location search and an end of the search in response to the location search request.

When receiving firmware data from the external device, the controller 13 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 13 may control the firmware update of the aerosol generating device 1 to be performed.

The controller 13 may transmit data regarding a sensing value of at least one sensor unit 14 to the external server (not shown) through the communicator 50, and receive from the server and store a learning model generated by learning the sensing value through machine learning such as deep learning. The controller 13 may perform an operation of determining an inhalation pattern of the user, an operation of generating a temperature profile, and the like by using the learning model received from the server. The controller 13 may store, in the memory 60, sensing value data of at least one sensor unit 14, data for training an artificial neural network (ANN), and the like. For example, the memory 60 may store a database for each component provided in the aerosol generating device 1, which is for training the ANN, and weights and biases constituting the structure of the ANN. The controller 13 may generate at least one learning model used for determining the inhalation pattern of the user, generating the temperature profile, and the like, by learning data regarding the sensing value of the at least one sensor unit 14, the inhalation pattern of the user, the temperature profile, and the like which are stored in the memory 60.

Some embodiments or other embodiments of the disclosure described above are not exclusive or distinct from each other. In some embodiments or other embodiments of the disclosure described above, respective components or functions may be used in combination with one another or combined with one another.

For example, a component A described in a particular embodiment and/or drawing and a component B described in another embodiment and/or drawing may be combined with each other. In other words, even when coupling between components is not directly described, the coupling may be made except when the coupling is described as impossible.

The above description should not be construed as being limited in all respects but should be considered illustrative. The scope of the disclosure should be determined by the logical interpretation of appended claims, and all changes within the equivalent scope of the disclosure are included in the scope of the disclosure.

### Industrial Applicability

The present disclosure relates to an aerosol generating device including a detachable battery.

## Claims

1. An aerosol generating device comprising:
a main-body forming an exterior;
a battery comprising a first battery electrode arranged on a first surface and a second battery electrode arranged on a second surface different from the first surface;
a battery coupling unit to which the battery is detachably coupled; and
a main-body electrode disposed on the battery coupling unit and selectively electrically connected to one of the first battery electrode and the second battery electrode.

2. The aerosol generating device of claim 1, wherein the first surface and the second surface of surfaces of the battery face in opposite directions.

3. The aerosol generating device of claim 1, wherein the battery has a shape of a cylinder or a shape of an elliptical cylinder, and
each of the first surface and the second surface are a bottom surface of the cylinder or the elliptical cylinder that forms the shape of the battery.

4. The aerosol generating device of claim 1, wherein
the main-body electrode is circular, and
each of the first battery electrode and the second battery electrode is circular, in correspondence with a shape of the main-body electrode.

5. The aerosol generating device of claim 1, further comprising an elastic body that presses the main-body electrode toward the battery.

6. The aerosol generating device of claim 1, wherein the battery has a shape of a rectangular cuboid, and the first surface and the second surface face in opposite directions.

7. The aerosol generating device of claim 1, wherein the first surface and the second surface are inclined surfaces forming a predefined angle with respect to a longitudinal direction of the battery, the battery coupling unit comprises a main-body inclined surface disposed at a position facing either the first surface or the second surface, and the main-body electrode is disposed on the main-body inclined surface.

8. The aerosol generating device of claim 1, further comprising a battery cover selectively opening or closing the battery coupling unit.

9. The aerosol generating device of claim 8, wherein when the battery cover is opened, the battery coupling unit is opened in a longitudinal direction of the main-body.

10. The aerosol generating device of claim 8, wherein when the battery cover is opened, the battery coupling unit is opened in a direction transverse to a longitudinal direction of the main-body.

11. The aerosol generating device of claim 8, wherein the battery cover comprises a cover electrode selectively electrically connected to one of the first battery electrode and the second battery electrode.

12. The aerosol generating device of claim 11, wherein the cover electrode supplies power to the battery through the first battery electrode or the second battery electrode.
